# EUROPÄISCHE PATENTSCHRIFT

(11) **EP 3 533 538 B1**
(45) Veröffentlichungstag und Bekanntmachung des Hinweises auf die Patenterteilung: **09.03.2022**
(21) Anmeldenummer: 19153195.3
(22) Anmeldetag: 23.01.2019
(51) Int. Cl.: B22F 10/66, B22F 10/73, B33Y 40/20, B22F 3/00, B22F 3/105, B22F 3/24, F16L 43/00, B33Y 40/00, B29C 64/35, B08B 9/20, B08B 15/02, F28G 7/00, B08B 7/02

(54) **REINIGUNGSVORRICHTUNG ZUM REINIGEN VON DURCH SCHICHTAUFBAU HERGESTELLTEN OBJEKTEN VON LOSEN PARTIKELN**
CLEANING DEVICE FOR CLEANING LAYERED OBJECTS MADE OF LOOSE PARTICLES
DISPOSITIF DE NETTOYAGE DESTINÉ AU NETTOYAGE DES OBJETS FABRIQUÉ PAR COUCHES DE PARTICULES LIBRES

(30) Priorität: 19.02.2018 DE 102018001604; 07.11.2018 DE 102018008738
(43) Veröffentlichungstag der Anmeldung: 04.09.2019
(73) Patentinhaber: Solukon Ingenieure GbR, 86391 Stadtbergen (DE)
(72) Erfinder: HARTMANN, Andreas, 86391 Stadtbergen (DE)
(74) Vertreter: Wiedemann, Markus

(56) Entgegenhaltungen:
- EP-A1- 3 263 237
- EP-A1- 3 475 018
- EP-B1- 3 475 018
- WO-A1-2017/215921
- CN-A- 106 626 391
- DE-U1-202016 003 042

## Beschreibung

Die vorliegende Erfindung betrifft eine Reinigungsvorrichtung, welche dreidimensionale Objekte, die durch schichtweises Aufbringen und selektives Verfestigen eines pulverförmigen Aufbaumaterials hergestellt worden sind, von die Objekte umgebendem und/oder in Öffnungen der Objekte verbliebenem, nicht verfestigtem pulverförmigem Aufbaumaterial reinigt, gemäß dem Oberbegriff von Anspruch 1.

Um thermischen Verzug im Objekt während des Bauprozesses (z. B. Strahlschmelzprozess) zu vermeiden, kann das Objekt über eine ebenfalls während des Bauprozesses aufgebaute Stützstruktur fest mit der Bauplattform verbunden werden. Nach dem Bauprozess muss das Objekt samt der angebundenen Stützstrukturen und der Bauplattform vom losem und nicht verfestigtem pulverförmigem Aufbaumaterial gereinigt werden. Dieser Vorgang wird z.B. als Auspacken bezeichnet. Nach dem Auspacken muss das Bauteil samt Stützstrukturen von der Bauplattform entfernt werden, bevor die Stützstrukturen vom Bauteil selbst entfernt werden können. Im Stand der Technik werden zum Abtrennen des Objekts von der Bauplattform konventionelle Bandsägemaschinen oder Bügelsägemaschinen eingesetzt. Bei kleinen Bauteilabmessungen wird das Bauteil teilweise auch manuell mit Hammer und Meißel entfernt.

Im Regelfall sind die Stützstrukturen feine Gitterwerke, in oder an denen auch nach dem Auspacken noch reichlich ungebundene Partikelmaterialreste haften. Beim Abtrennen des Bauteils von der Baumplattform und jeder weiterer Bearbeitung des Bauteils können bei unzureichender Reinigung Partikelmaterialreste freigesetzt werden. Je nach Materialart können die Partikel bei Kontakt oder Aufnahme enorme gesundheitliche Gefahr bergen. Bestimmte Partikelmaterialien wie Aluminium- und Titanlegierungen können bei Aufwirbelung zu Staubwolken zu einer heftigen Staubexplosion führen.

Eine gattungsgemäße Reinigungsvorrichtung ist aus WO 2015/071184 A1 bekannt. Dort wird ein Wechselbehälter, in welchem das Objekt und eine Bauplattform für das Objekt untergebracht sind, an einer Drehvorrichtung angebracht und dann der Wechselbehälter um einen Winkel von mindestens 90° aus der aufrechten Position herausgedreht, damit unverfestigt gebliebenes Pulver aus dem Wechselbehälter herausrieseln kann. Zusätzlich ist vorgesehen, dass Vibrationen von außen auf den Wechselbehälter aufgebracht werden, um ein Ablösen von Pulver von dem Objekt zu unterstützen. Weitere gattungsgemäße Reinigungsvorrichtungen sind auch WO 2017/215921 A1, in DE 20 2016 003042 U1 sowie in der nachveröffentlichten EP 3 475 018 A1 offenbart.

Die Schichtbauweise der Objekte ermöglicht eine Herstellung von Innenstrukturen mit komplexer Form wie z.B. eine Herstellung verwinkelter oder hinterschnittener Kanäle oder Kavitäten innerhalb der Objekte. Folglich befindet sich dann nicht nur an der Außenfläche der Objekte nicht verfestigtes pulverförmiges Aufbaumaterial sondern auch im Inneren des Objekts, wobei aber die Richtung der inneren Kanäle oder Kavitäten in Bezug auf eine aufrechte bzw. nach unten verkippte Position beliebig sein kann. Vor diesem Hintergrund arbeitet die Reinigungsvorrichtung gemäß WO 2015/071184 A1 zu unspezifisch, zumal der Reinigungsfortschritt am Objekt von außerhalb des Wechselbehälters nicht oder nur schwer beurteilt werden kann.

Demzufolge besteht die Aufgabe der Erfindung darin, eine Reinigungsvorrichtung der eingangs erwähnten Art derart fortzubilden, dass damit eine verbesserte Reinigung der Objekte erzielt werden kann.

Diese Aufgabe wird erfindungsgemäß durch die Merkmale von Anspruch 1 gelöst. Offenbarung der Erfindung

Die Erfindung geht aus von einer Reinigungsvorrichtung gemäß Anspruch 1, welche dreidimensionale

Objekte, die durch schichtweises Aufbringen und selektives Verfestigen eines pulverförmigen Aufbaumaterials hergestellt worden sind, von die Objekte umgebendem und/oder in Öffnungen oder Kanälen der Objekte verbliebenem, nicht verfestigtem pulverförmigem Aufbaumaterial reinigt, umfassend
a) eine Reinigungskammer, in welcher die Reinigung eines Objekts stattfindet und welche wenigstens eine Auslassöffnung zum Auslass des von dem Objekt abgereinigten Pulvers aus der Reinigungskammer aufweist, wobei das abgereinigte Pulver die Auslassöffnung passiert,
b) eine Schwenkeinrichtung, an welcher das Objekt spannbar und durch welche das Objekt in Bezug auf wenigstens eine Schwenkachse in verschiedene Schwenkstellungen schwenkbar ist,
c) eine elektronische Steuereinrichtung, welche die Schwenkeinrichtung steuert oder regelt, um die Schwenkstellungen des Objekts zu steuern oder zu regel n.

Das Herstellen des dreidimensionalen Objekts, wie beispielsweise eines Bauteils oder Modells erfolgt daher in einem Schichtbauverfahren mit Hilfe von Computerdaten, indem wiederholt dünne Schichten aus losem pulverförmigen Aufbaumaterial auf eine Bauplattform aufgetragen werden und jede einzelne Schicht selektiv zu einem Bauteil- oder Modellquerschnitt verfestigt wird. Die Verfestigung erfolgt beispielsweise chemisch, indem mit Drucktechnologie Tröpfchen aus Kleber selektiv auf festgelegte Bereiche der Schichten aus losem pulverförmigen Aufbaumaterial aufgebracht werden. Alternativ besteht die Möglichkeit, loses pulverförmiges Aufbaumaterial selektiv mit energiereicher Strahlung zu verschmelzen oder zu versintern.

Unter einem Objekt soll im Sinne der Erfindung ein zusammen mit der Bauplattform hergestelltes Werkstück oder Bauteil verstanden werden, oder auch das Werkstück oder Bauteil alleine ohne die Bauplattform, welche zuvor vom Bauteil oder Werkstück abgetrennt wurde.

Die Reinigung des Objekts von losem, nicht verfestigtem pulverförmigem Aufbaumaterial in der Reinigungsvorrichtung kann das komplette Auspacken des Objekts und der Bauplattform aus dem Pulverkuchen losen Pulvers beinhalten oder aber lediglich ein Abreinigen von Resten von losem Pulver von dem Objekt und der Bauplattform und gegebenenfalls von Stützstrukturen, weiches nach dem Auspacken noch haften.

Erfindungsgemäß ist bei der Reinigungsvorrichtung vorgesehen, dass
d) sie weiterhin eine Sensoreinrichtung umfasst, welche eine Reinigungsgröße erfasst, die eine Menge, eine Masse, einen Massenstrom, ein Volumen und/oder einen Volumenstrom des die wenigstens eine Auslassöffnung passierenden, vom oder aus dem Objekt abgereinigten pulverförmigen Aufbaumaterials repräsentiert, wobei
e) die elektronische Steuereinrichtung die Schwenkeinrichtung in dem folgendem Reinigungsprozess derart steuert oder regelt, dass das Objekt in Bezug auf die wenigstens eine Schwenkachse in verschiedene Schwenkstellungen geschwenkt und dabei die Reinigungsgröße durch die Sensoreinrichtung erfasst wird, wobei das Schwenken des Objekts in jeder Schwenkstellung der verschiedenen Schwenkstellungen gestoppt wird, in welcher die Reinigungsgröße einen vorgegebenen Mindestwert für die Reinigungsgröße erreicht oder überschritten hat, und dann das Objekt solange in der betreffenden Schwenkstellung gehalten und dabei die Reinigungsgröße erfasst wird, bis die Reinigungsgröße den vorgegebenen Mindestwert unterschritten hat, und dann das Objekt in weitere Schwenkstellungen geschwenkt wird, wobei das Schwenken des Objekts in weitere Schwenkstellungen und der Reinigungsprozess beendet werden, wenn die erfasste Reinigungsgröße in keiner der eingenommenen Schwenkstellungen mehr den vorgegebenen Mindestwert für die Reinigungsgröße erreicht oder überschreitet.

Die Reinigungsgröße stellt dann ein Maß für das Reinigungsergebnis, d. h. für die Menge, die Masse, den Massenstrom, das Volumen und/oder den Volumenstrom des die wenigstens eine Auslassöffnung passierenden abgereinigten pulverförmigen Aufbaumaterials dar, welches dann ausschließlich von dem Objekt abgereinigtes pulverförmiges Aufbaumaterial darstellt, weil dafür Sorge getragen wird, dass in der Reinigungskammer vor dem Beginn des Reinigungsprozesses außer an dem Objekt kein weiteres pulverförmiges Aufbaumaterial vorhanden ist.

Je größer daher die Reinigungsgröße ist, desto besser ist das Reinigungsergebnis und desto größer ist auch die Menge, die Masse, den Massenstrom, das Volumen und/oder den Volumenstrom des die wenigstens eine Auslassöffnung passierenden abgereinigten Pulvers. Umgekehrt ist die Reinigungsgröße umso kleiner, desto kleiner die Menge, die Masse, den Massenstrom, das Volumen und/oder den Volumenstrom des die wenigstens eine Auslassöffnung passierenden abgereinigten Pulvers ist.

Die Erfindung hat erkannt, dass die Wirkung beispielsweise der Schwerkraft und/oder eines von außen auf das Objekt aufgebrachten Reinigungsstrahls eines Reinigungsmediums und/oder von mit Hilfe eines Rüttlers auf das Objekt aufgebrachten Schwingungen in unterschiedlichen Schwenkstellungen eines Objekts in der Regel auch unterschiedliche Reinigungsergebnisse in Form der Reinigungsgrößen mit sich bringt, weil dann beispielsweise Innenstrukturen wie beispielsweise Kanäle und/oder oder auch Außenflächen dann in Bezug zu einer Referenz, wie beispielsweise in Bezug zur Vertikalen (Richtung der Schwerkraft) oder auch in Bezug zur Richtung des Reinigungsstrahls unterschiedliche Ausrichtungen aufweisen.

Beispielsweise steht eine relativ hohe Reinigungsgröße zu erwarten, wenn ein Objekt mit einem im Objekt ausgebildeten Kanal in eine "günstige" Schwenkstellung gebracht wird, in weicher dieser Kanal etwa parallel zur Vertikalen (Richtung der Schwerkraft) steht, damit nicht verfestigtes pulverförmiges Aufbaumaterial, welches noch an den Innenwänden des Kanals anhaftet, dann infolge der Schwerkraft und beispielsweise durch Schwingungsanregung mittels eines Rüttlers unterstützt aus dem betreffenden Kanal oder aus der betreffenden Kavität herausfließen kann.

Vorzugsweise wird dann eine solche "günstige" Schwenkstellung des Objekts von der elektronischen Steuereinrichtung durch die Rückkopplung der über die Sensoreinrichtung gemessenen Reinigungsgröße dadurch ermittelt, dass die Reinigungsgröße dann einen vorgegebenen Mindestwert für die Reinigungsgröße erreicht oder überschritten hat. Dieser Mindestwert für die Reinigungsgröße kann abhängig vom jeweiligen Objekt vorgegeben sein. Das Erreichen oder Überschreiten des Mindestwerts für die Reinigungsgröße durch die Reinigungsgröße deutet dann darauf hin, dass pulverförmiges Aufbaumaterial in erheblichem oder nennenswertem Umfang die wenigstens eine Auslassöffnung der Reinigungskammer passiert hat.

Dann wird das Objekt durch die Steuerung der Regelung der Steuereinrichtung vorzugsweise solange in der betreffenden "günstigen" Schwenkstellung gehalten und dabei die Reinigungsgröße erfasst, bis durch Austrag des pulverförmigem Aufbaumaterials mittels der wenigstens einen Auslassöffnung aus der Reinigungskammer die Reinigungsgröße den Mindestwert oder einen anderen Mindestwert unterschritten hat. Dies deutet dann daraufhin, dass in dieser "günstigen" Schwenkstellung keine nennenswerte Menge an pulverförmigem Aufbaumaterial mehr von oder aus dem Objekt abfließen kann, sei es aufgrund des Einflusses der Schwerkraft und/oder aufgrund der Wirkung des Reinigungsstrahls des Reinigungsmediums und/oder aufgrund der Wirkung der durch den Rüttler auf das Objekt aufgebrachten Schwingungen.

Folglich wird dann das Objekt in weitere, von der vormals "günstigen" Schwenkstellung abweichende Schwenkstellungen geschwenkt, damit der oben beschriebene und von der Steuer- und Regeleinrichtung gesteuerte Reinigungsprozess von Neuem beginnen kann.

Das Schwenken des Objekts in weitere Schwenkstellungen und der Reinigungsprozess werden dann vorzugsweise beendet, wenn die erfasste Reinigungsgröße in keiner der eingenommenen Schwenkstellungen mehr den vorgegebenen Mindestwert für die Reinigungsgröße erreicht oder überschreitet. Dies stellt dann ein Indiz dafür dar, dass von oder aus dem Objekt keine nennenswerte Menge an nicht verfestigtem Aufbaumaterial mehr abgereinigt werden kann und das Objekt daher "sauber" ist.

Für einen automatisierten Reinigungsprozess muss die Reinigung beschleunigt und der Reinheitsgrad sichergestellt werden. Dazu wird das Objekt gemäß einem Verfahren nach der Erfindung zunächst durch eine Steuereinrichtung in eine Schwenkstellung gebracht, in welcher durch eine Sensoreinrichtung festgestellt wird, dass eine ein Mindestmaß erreichende oder überschreitende Menge an nicht verfestigtem pulverförmigen Aufbaumaterial von oder aus dem Objekt abfließt. Das Objekt wird dann durch die Steuereinrichtung solange in dieser Schwenkstellung gehalten, bis die Sensoreinrichtung feststellt, dass kein oder nur eine das Mindestmaß unterschreitende Menge an nicht verfestigtem pulverförmigem Aufbaumaterial von oder aus dem Objekt durch die Sensoreinrichtung abfließt. Anschließend wird das Objekt durch die Steuereinrichtung in wenigstens eine weitere Schwenkstellung verschwenkt, in welcher wiederum durch die Sensoreinrichtung festgestellt wird, dass eine ein Mindestmaß erreichende oder überschreitende Menge an nicht verfestigtem pulverförmigen Aufbaumaterial von oder aus dem Objekt abfließt. Das Objekt wird dann durch die Steuereinrichtung solange in dieser wenigstens einen weiteren Schwenkstellung gehalten, bis die Sensoreinrichtung feststellt, dass kein oder nur eine das Mindestmaß unterschreitende Menge an nicht verfestigtem pulverförmigem Aufbaumaterial von oder aus dem Objekt durch die Sensoreinrichtung abfließt.

Das Verschwenken des Objekts in verschiedene weitere Schwenkstellungen wird dann solange fortgesetzt, bis durch die Sensoreinrichtung in jeder eingenommenen Schwenkstellung des Objekts kein oder nur ein geringer Abfluss an nicht verfestigtem pulverförmigem Aufbaumaterial von oder aus dem Objekt erkannt werden kann.

Der oben beschriebene Reinigungsprozess wird von der Steuereinrichtung mittels einer Software gesteuert oder geregelt. Durch die Erfindung erfolgt insbesondere eine selbständige Programmierung des Reinigungsprozesses, wie oben beschrieben wurde.

Der Vorteil dieser Maßnahmen liegt dann darin, dass der Reinigungsprozess in Bezug auf die Geometrie des zu reinigenden Objekts und/oder in Bezug zu die

Reinigung auslösenden oder unterstützenden Maßnahmen wie beispielsweise der Schwerkraft und/oder das Aufbringen von Schwingungen auf das Objekt durch einen Rüttler und/oder die Wirkung eines Reinigungsstrahls eines Reinigungsmediums gezielt abläuft und diesbezüglich "günstige" Schwenkstellungen des Objekts herausgefunden werden und dann das Objekt in diesen "günstigen" Schwenkstellungen gereinigt wird.

Mit Hilfe der Erfindung kann beispielsweise vor oder nach dem Auspacken eines Objekts in kleinen Öffnungen, Kanälen, Hinterschneidungen und an Stützstrukturen anhaftendes nicht verfestigtes pulverförmiges Aufbaumaterial vom Objekt entfernt werden. Durch die Rückkopplung der Reinigungsgröße in die Steuereinrichtung, welche das Reinigungsergebnis des Objekts repräsentiert, kann weiterhin der Reinigungszustand des Objekts in verschiedenen Schwenkpositionen überprüft werden, ohne dass das Objekt hierzu aus der Reinigungskammer entfernt werden müsste und daher ohne mit dem Aufbaumaterial in Berührung zu kommen. Denn eine Beendigung des Reinigungsprozesses durch Feststellen mittels der Sensoreinrichtung, dass in jeglichen oder einer vorbestimmten Anzahl von Schwenkstellungen des Objekts keine nennenswerte Menge an pulverförmigem Aufbaumaterial die wenigstens eine Auslassöffnung mehr passiert, signalisiert bereits, dass das Objekt "sauber" ist. Daher kann der Reinigungsprozess mittels der Erfindung schnell und automatisiert ablaufen, womit eine sehr wirtschaftliche Reinigung erzielt wird.

Wie oben bereits angedeutet, steuert oder regelt die elektronische Steuereinrichtung die Schwenkeinrichtung in folgendem Reinigungsprozess derart, dass
a) das Objekt in Bezug auf die wenigstens eine Schwenkachse in verschiedene Schwenkstellungen geschwenkt und dabei die Reinigungsgröße erfasst wird, wobei das Schwenken des Objekts in jeder Schwenkstellung der verschiedenen Schwenkstellungen gestoppt wird, in welcher die Reinigungsgröße einen vorgegebenen Mindestwert für die Reinigungsgröße erreicht oder überschritten hat, und dann
b) das Objekt solange in der betreffenden Schwenkstellung gehalten und dabei die Reinigungsgröße erfasst wird, bis die Reinigungsgröße den Mindestwert oder einen anderen Mindestwert unterschritten hat, und dann
c) das Objekt in weitere Schwenkstellungen geschwenkt wird, wobei
d) das Schwenken des Objekts in weitere Schwenkstellungen und der Reinigungsprozess beendet werden, wenn die erfasste Reinigungsgröße in keiner der eingenommenen Schwenkstellungen mehr den vorgegebenen Mindestwert für die Reinigungsgröße erreicht oder überschreitet.

Besonders bevorzugt ist die elektronische Steuereinrichtung derart ausgebildet ist, dass sie wenigstens eine Schwenkstellung des Objekts, in welcher die Reinigungsgröße den Mindestwert erreicht oder überschritten hat, in einem Arbeitsspeicher als eine bevorzugte Schwenkstellung speichert.

Dann kann die elektronische Steuereinrichtung ausgebildet sein, dass sie mittels Steuerung der Schwenkeinrichtung das Objekt in die wenigstens eine in dem Arbeitsspeicher gespeicherte bevorzugte Schwenkstellung steuert oder regelt, wenn sie ein Signal erhalten hat, welches signalisiert oder darstellt, dass ein Objekt, welches bereits von nicht verfestigtem pulverförmigem Aufbaumaterial gereinigt worden ist, aus der Reinigungskammer entfernt und durch ein in Bezug auf das entfernte Objekt eine im Wesentlichen identische Geometrie aufweisendes und noch nicht von nicht verfestigtem pulverförmigem Aufbaumaterial gereinigtes Objekt ersetzt worden ist.

In vorteilhafter Weise können Schwenkstellungen, welche sich im Laufe eines Reinigungsprozesses eines Objekts als "bevorzugt" oder "günstig" herausgestellt haben, dann als bevorzugte Schwenkstellungen in einem anschließenden Reinigungsprozess eines weiteren Objekts verwendet werden, welches eine in Bezug auf bereits gereinigte Objekt eine im Wesentlichen identische Geometrie aufweist. Denn bei dem weiteren Objekt ist dann davon auszugehen, dass dieses dieselben "günstigen" oder "bevorzugten" Schwenkstellungen aufweist wie das zuvor gereinigte Objekt. Dies bringt den Vorteil einer Ersparnis an Zeit und Rechenleistung mit sich, wenn mehrere gleichartige Objekte gereinigt werden müssen.

Gemäß einer Weiterbildung kann ein durch die elektronische Steuereinrichtung steuer- oder regelbarer Rüttler vorgesehen sein, durch welchen das an oder in der Schwenkeinrichtung gespannte Objekt in Schwingungen versetzbar ist. Unter einem Rüttler soll jegliche Einrichtung verstanden werden, die in der Lage ist, aufgrund von durch ihn erzeugten harmonischen Schwingungen und/oder aufgrund von durch ihn erzeugten impulsartigen Anregungen wie z. B. von (wiederholten) Stößen oder von (wiederholtem) Klopfen das Objekt zu Schwingungen anzuregen. Auch fällt eine einzelne Anregung des Rüttlers wie z.B. ein einziger Stoß darunter. Unter von dem Rüttler erzeugten Schwingungen werden im Folgenden daher nicht nur harmonische Schwingungen sondern auch impulsartige Anregungen wie z. B. Stöße auf das Objekt oder Klopfen des Objekts verstanden, welche dann das Objekt zu Schwingungen anregen, insbesondere zum Schwingen in seiner Eigenfrequenz. Folglich wird unter einer Schwingungsamplitude im Folgenden nicht nur die Amplitude einer durch den Rüttler erzeugten harmonischen Schwingung sondern auch eine Amplitude von wenigstens einer durch den Rüttler erzeugten impulsartigen Anregung und unter einer Schwingungsfrequenz nicht nur die durch den Rüttler erzeugte Frequenz einer harmonischen Schwingung sondern auch eine durch den Rüttler erzeugte Frequenz von impulsartigen Anregungen verstanden.

Gemäß einer Fortbildung kann die elektronische Steuereinrichtung ausgebildet sein, dass sie die Schwingungsfrequenz und/oder die Schwingungsamplitude der durch den Rüttler erzeugten Schwingungen abhängig von der erfassten Reinigungsgröße steuert oder regelt.

Beispielsweise kann die elektronische Steuereinrichtung ausgebildet sein, dass sie in einer eingenommenen Schwenkstellung die Schwingungsfrequenz und/oder die Schwingungsamplitude der durch den Rüttler erzeugten Schwingungen solange variiert, bis die erfasste Reinigungsgröße einen relativen Maximalwert unter verschiedenen Werten von erfassten Reinigungsgrößen einnimmt, die mit unterschiedlichen Schwingungsfrequenzen und/oder mit unterschiedlichen Schwingungsamplitude erzielt worden sind, und dass dann die dem Maximalwert entsprechende Schwingungsfrequenz und/oder Schwingungsamplitude zumindest in der eingenommenen Schwenkstellung beibehalten wird.

Mit anderen Worten versucht die Steuereinrichtung durch Variation von Schwingungsfrequenz und/oder der Schwingungsamplitude der über den Rüttler auf das Objekt aufgebrachten Schwingungen diejenige Schwingungsfrequenz und/oder diejenige Schwingungsamplitude herauszufinden, welche sich über die Rückkopplung der Reinigungsgröße als optimal herausgestellt hat (haben) und dann einen relativen Maximalwert der Reinigungsgröße hervorrufen.

Auch kann die elektronische Steuereinrichtung ausgebildet sein, dass sie die Schwingungsfrequenz und/oder die Schwingungsamplitude, in welcher die Reinigungsgröße den relativen Maximalwert eingenommen hat, in einem Arbeitsspeicher als eine bevorzugte Schwingungsfrequenz und/oder als bevorzugte Schwingungsamplitude speichert.

Dann kann die elektronische Steuereinrichtung auch ausgebildet sein, dass sie den Rüttler steuert oder regelt, damit dieser Schwingungen mit der in dem Arbeitsspeicher gespeicherten bevorzugten Schwingungsfrequenz und/oder mit der bevorzugten Schwingungsamplitude erzeugt, wenn sie ein Signal erhalten hat, welches signalisiert oder darstellt, dass ein Objekt, welches bereits von nicht verfestigtem pulverförmigem Aufbaumaterial gereinigt worden ist, aus der Reinigungskammer entfernt und durch ein in Bezug auf das entfernte Objekt eine im Wesentlichen identische Geometrie aufweisendes, noch nicht von nicht verfestigtem pulverförmigem Aufbaumaterial gereinigtes Objekt ersetzt und ein weiterer Reinigungsprozeß zur Reinigung des weiteren Objekts gestartet worden ist. Dieses Signal kann entweder automatisch oder auch händisch von einer Bedienperson der Reinigungsvorrichtung erzeugt werden.

Auch hier wird daher die Historie wenigstens eines Reinigungsprozesses eines Objekts genutzt, um in der Vergangenheit sich als "bevorzugt" oder "günstig" herausgestellte Schwingungsfrequenzen und/oder Schwingungsamplituden auch bei durch den Rüttler erzeugten Schwingungen anzuwenden, mit welchen wenigstens ein weiteres Objekt angeregt wird, welches eine im Wesentlichen identische Geometrie aufweist. Dies bringt eine weitere Ersparnis an Zeit und Rechenleistung mit sich, wenn mehrere gleichartige Objekte gereinigt werden müssen.

Die Sensoreinrichtung ist ausgebildet, um die Reinigungsgröße bzw. das Reinigungsergebnis wenigstens quantitativ zu erfassen. Demzufolge ist die Sensoreinrichtung ausgebildet, dass sie eine Menge, eine Masse, einen Massenstrom, ein Volumen und/oder einen Volumenstrom des die wenigstens eine Auslassöffnung passierenden abgereinigten pulverförmigen Aufbaumaterials erfassen kann. Beispielsweise kann die Sensoreinrichtung hierzu wenigstens einen kapazitiven und/oder nach dem Ultraschallprinzip arbeitenden Sensor und/oder wenigstens einen optischen Sensor umfassen.

Dabei kann die Sensoreinrichtung insbesondere im Bereich der wenigstens einen Auslassöffnung angeordnet sein.

Auch kann die Auslassöffnung in einem in Gebrauchslage der Reinigungsvorrichtung gesehen unteren Bereich der Reinigungskammer angeordnet sein, damit das abgereinigte pulverförmige Aufbaumaterial infolge des Einflusses der Schwerkraft aus der Reinigungskammer austreten bzw. ausfließen kann.

Auch kann ein Strömungsquerschnitt der wenigstens einen Auslassöffnung mittels einer Ventileinrichtung zwischen einer Öffnungsstellung, in welcher der Strömungsquerschnitt maximal ist, und einer Schließstellung, in welcher der Strömungsquerschnitt gleich Null ist, steuerbar sein.

Gemäß einer Weiterbildung kann die Schwenkeinrichtung einen Drehteller umfassen, auf welchem das Objekt lösbar spannbar ist, wobei der Drehteller um eine erste Drehachse drehbar angetrieben ist. Dabei kann insbesondere der Rüttler auf dem Drehteller angeordnet sein.

Weiterhin kann die Schwenkeinrichtung einen um eine zweite, gegenüber der ersten Drehachse verschiedenen Drehachse drehbar angetriebenen Dreharm umfassen, auf welcher der Drehteller um die erste Drehachse drehbar angetrieben gelagert ist. Die zweite Drehachse ist beispielsweise in einer in Gebrauchslage der Reinigungsvorrichtung gesehen horizontalen Fläche angeordnet.

Durch eine Drehung um die beiden Achsen, welche beispielsweise orthogonal zueinander angeordnet sind, können eine Vielzahl von unterschiedlichen Schwenkstellungen des Objekts erzeugt werden und damit auch eine Auswahl von möglichen "günstigen" oder "bevorzugten" Schwenkstellungen des Objekts.

In der bevorzugten Ausführung der Erfindung kragt die Dreharm von einer vertikalen Seitenwand der Reinigungskammer frei aus. Der Dreharm wird beispielsweise hohl ausgeführt, um Platz für elektrische Steuer- und Energieleitungen zum Drehteller oder zum Rüttler hin bereitzustellen. Ein Schwenklager für den Dreharm wird so gedichtet, das nur ein schmaler, beispielsweise umlaufender Spalt entsteht. In diesen Spalt wird beispielsweise Druckluft oder Schutzgas zur Reinigungskammer-Inertisierung eingeblasen, so dass das Eindringen von pulverförmigem Aufbaumaterial in das Drehlager unterbunden wird.

Das Objekt wird bevorzugt durch eine Spanneinrichtung auf dem Drehteller lösbar gespannt, der an dem Dreharm drehbar angetrieben gelagert ist. Dieser Drehteller kann durch elastische Elemente wie z.B. Gummifedern von seinem Antrieb entkoppelt sein. An dem Drehteller ist auch bevorzugt der Rüttler angeordnet. Der Rüttler ist vorzugsweise ein pneumatischer Aktor wie z.B. eine Turbine.

Zum Antrieb eines pneumatischen Rüttlers kann neben Druckluft auch Schutzgas eingesetzt werden. Da Druckluft als Abluft des Rüttlers die inerte Atmosphäre in der Prozesskammer verdrängen würde, wird die Abluft des Rüttlers bevorzugt über die das hohle Innere des Dreharms aus der Reinigungskammer nach außen geführt.

Da jedes Objekt geometrie- und materialabhängig unterschiedliche Eigenfrequenzen aufweist, kann die Frequenz der durch den Rüttler erzeugten Schwingungen durch die elektronische Steuer- und Regeleinrichtung variiert werden. Während des Reinigungsprozesses wird deshalb die Frequenz der durch den Rüttler erzeugten Schwingungen bevorzugt variiert. Wenn dabei die Frequenz der durch den Rüttler erzeugten Schwingungen der Eigenfrequenz des Objekts oder Vielfachen davon entspricht, so schwingt das Objekt verstärkt in seiner Eigenfrequenz, was ein Ablösen von pulverförmigem Aufbaumaterial begünstigt.

Die Eigenfrequenz oder von Vielfachen der Eigenfrequenz kann daher durch den Wert der Reinigungsgröße detektiert werden, welche durch die Sensoreinrichtung erfasst wird. Stellt sich nämlich bei der Variation der Schwingungsfrequenz der durch den Rüttler aufgebrachten Schwingungen heraus, dass bei einer der eingestellten Frequenzen die Reinigungsgröße maximal ist, so deutet dies daraufhin, dass die es sich bei der eingestellten Frequenz und die Eigenfrequenz oder einer Vielfachen hiervon handelt. Die so detektierte Eigenfrequenz wird dann als bevorzugte Schwingungsfrequenz in einem Arbeitsspeicher gespeichert und dann in einem weiteren Reinigungsprozeß eines geometrisch identischen Objekts als "bevorzugte" Schwingungsfrequenz zur Schwingungsanregung dieses geometrisch identischen Objekts verwendet.

In der bevorzugten Ausführung der Erfindung schaltet sich die als Rüttler verwendete pneumatische Turbine kontinuierlich ein und aus, so dass beim Hochlaufen der Turbine alle Frequenzbereiche durchlaufen werden.

Auch kann die wenigstens eine Auslassöffnung derart mit einer Absaugeinrichtung in Strömungsverbindung stehen, dass in der wenigstens einen Auslassöffnung eine Saugströmung in Bezug auf das nicht verfestigte pulverförmige Aufbaumaterial in der Reinigungskammer erzeugt wird, und dass die Sensoreinrichtung derart in oder an der Auslassöffnung angeordnet ist, dass sie die, den oder das in der Saugströmung strömende(n) Menge, Masse, Massenstrom, Volumen und/oder Volumenstrom des vom oder aus dem Objekt abgereinigten pulverförmigen Aufbaumaterials erfasst.

Die Reinigungskammer ist bevorzugt pulverdicht ausgebildet und kann eine oder mehrere beispielsweise durch wenigstens eine Klappe verschließbare Zugangsöffnung aufweisen, durch welche zu reinigende Objekte zu- und abführbar sind.

Zusammenfassend basiert die Erfindung auf dem Gedanken, dass das Objekt um mindestens eine Schwenkachse innerhalb einer bevorzugt staubdichten Reinigungskammer geschwenkt wird, so dass Pulvermaterial aus verschiedenen Richtungen des Objekts abfließen oder abgesaugt werden kann. Zur Steigerung des Materialabflusses wird das Objekt bevorzugt durch einen Rüttler mit Schwingungen angeregt, welche eine Fluidisierung des nicht verfestigten und am oder im Objekt noch anhaftenden pulverförmigen Aufbaumaterials begünstigen.

Die Arbeitskammer trennt das Objekt von etwaigen Zündquellen wie z.B. von dem Antriebsmotor der Schwenkeinrichtung oder einer Beleuchtungsquelle. Unabhängig von der oben beschriebenen Erfindung wird die Explosionsgefahr durch am Objekt anhaftenden nicht verfestigtes pulverförmiges Ausgangsmaterial herabgesetzt, indem in die Reinigungskammer zumindest vor dem Reinigungsprozess eines Objekts ein inertes Schutzgas wie z.B. Argon eingeströmt wird.

Bevorzugt wird hierzu eine Schutzgaseinrichtung von einer elektronischen Steuereinrichtung derart gesteuert, dass in die Reinigungskammer in zwei Schritten Schutzgas eingeströmt wird. In einem ersten Schritt, der Schnell-Inertisierung wird das Schutzgas mit maximal möglichem Volumenstrom beispielsweise unter einem gebrauchsüblichen Druck von etwa 6 bar in die Reinigungskammer geblasen. Ist der Luftsauerstoff so weit verdrängt, dass keine explosionsfähige Atmosphäre mehr entstehen kann, wird nur noch so viel Schutzgas in einem zweiten Schritt eingeströmt, so dass die Reinigungskammer unter einem geringen Überdruck gegenüber Außendruck steht. Dieser zweite Schritt der Inertisierung wird als Dauer-Inertisierung bezeichnet.

Der Grad der Schutzgas-Inertisierung wird von Sensoren überwacht. Mindestens ein Durchflusssensor stellt den Durchfluss des Schutzgases während der Schnell-Inertisierung sicher. Der Sensor ist auf den Durchfluss des Gases während der Schnell-Inertisierung eingestellt. Hat der Durchflusssensor den Gasdurchfluss für eine vorbestimmte Zeit gemessen, die ausreicht, um die Reinigungskammer sicher zu inertisieren, wird auf Dauer-Inertisierung umgestellt. Stellt dieser oder ein weiterer Durchflusssensor den Durchfluss für die Dauer-Inertisierung fest, ist mindestens eine Bedingung für ein Durchführen des Reinigungsprozesses des Objekts in der Reinigungskammer erfüllt. Hierzu kann die elektronische Steuereinrichtung, in welcher eine entsprechende Steuer- oder Regelroutine implementiert ist, mit einem Durchflusssensor für das Schutzgas zusammenwirken.

Der Start des Reinigungsprozesses des Objekts in der Reinigungskammer kann auch abhängig von dem in der Reinigungskammer herrschenden Druck gemacht werden. Beispielsweise bei einem Unterschreiten eines vorgegebenen Drucks durch den Druck in der Reinigungsklammer wird ein Start eines Reinigungsprozesses verhindert bzw. nicht zugelassen. Hierzu kann eine elektronische Steuereinrichtung, in welcher eine entsprechende Steuer- oder Regelroutine implementiert ist, mit einem Drucksensor in der Reinigungskammer zusammenwirken.

Der Start des Reinigungsprozesses des Objekts in der Reinigungskammer kann auch abhängig von dem Sauerstoff in der Reinigungskammer erfolgen. Beispielsweise wird der Start des Reinigungsprozesses durch eine elektronische Steuereinrichtung nur dann zugelassen, wenn der Anteil an Sauerstoff in der Reinigungskammer zum Beispiel 5% oder weniger beträgt. Hierzu kann die elektronische Steuereinrichtung, in welcher eine entsprechende Steuer- oder Regelroutine implementiert ist, mit einem Sensor in der Reinigungskammer zusammenwirken, welcher dort den Sauerstoffanteil misst.

Wie oben beschrieben wird der Reinigungsprozess bevorzugt mit Überdruck in der Reinigungskammer mittels Einströmen von Schutzgas durchgeführt. Überschüssiges Schutzgas muss aber aus Reinigungskammer entweichen können. Um ein Ausströmen von pulverförmigem Aufbaumaterial zusammen mit dem Schutzgas aus der Reinigungskammer zu verhindern ist, kann in einer Abströmöffnung der Reinigungskammer ein Filter angeordnet sein, welches das pulverförmige Aufbaumaterial aus dem Schutzgasstrom ausfiltert. Um das abströmende pulverförmige Aufbaumaterial zu sammeln, kann der Filter auch außerhalb der Reinigungskammer in einem Filtergehäuse z.B. einem Zyklonabscheider angeordnet sein.

Um das Eindringen von Luft in die Reinigungskammer zu vermeiden, kann außerdem am Filtergehäuse eine Rückschlagvorrichtung angebracht sein. Die Rückschlagvorrichtung weist beispielsweise in Schließstellung federvorgespannte Klappen oder schwerkraftgesteuerte Klappen auf. Die Federkraft oder das Gewicht der Klappe dient in Kombination mit der Druckeinstellung des Schutzgases zur Regelung des Reinigungskammerinnendrucks. In einer bevorzugten Ausführung dient ein Ball als Rückschlagvorrichtung. Der Ball ruht dabei auf einer runden Gummidichtung innerhalb eines Abgasrohrs. Das Abgasrohr sitzt senkrecht auf einem Gehäuse hinter dem Filter. In diesem Gehäuse sind vorzugsweise die Sensoren für Restsauerstoff und Reinigungskammerdruck angebracht. Der Ball kann dabei durch Befüllung z.B. mit einem Granulat im Gewicht geändert werden. Mit zunehmendem Gewicht des Balles steigt der Reinigungskammerinnendruck. Das Abgasrohr dient gleichzeitig als Anbindungsstelle für einen Abgasschlauch der an eine Reinigungskammerentlüftung angeschlossen werden kann.

Das Filtergehäuse wird so an der Reinigungsvorrichtung angebracht, dass der Abluftpunkt höher sitzt als die Reinigungskammer selbst. Dadurch ist bei schweren Schutzgasen wie z.B. Argon gewährleistet, dass auch ohne Rückschlagventil, kein Luftsauerstoff in die Reinigungskammer gelangen kann.

Um Schutzgas zu sparen muss die Reinigungskammer so kompakt wie möglich ausgeführt sein.

Weiterhin weist die Reinigungskammer an ihrer in Gebrauchslage gesehen unteren Begrenzungsfläche einen trichterförmigen Bereich aufweist, an dessen Ende die Auslassöffnung ausgebildet ist.

Die Reinigungskammer wird vorzugsweise über eine Klappe von oben beladen. Dies begünstigt die Einsparung von teuren Schutzgasen wie z.B. Argon. Argon ist schwerer als Luft und vermischt sich nur schlecht mit dieser. Bei einer Öffnung der Reinigungskammer von oben bleibt das Argon daher in der Reinigungskammer.

Zur Einsparung kann das Schutzgas vor oder während es Öffnens der Klappe auch langsam abgesaugt und gespeichert werden. Dazu erweisen sich Pumpen mit Windkessel als sinnvoll.

Nach dem Reinigen des Objekts wird das Objekt von der Bauplattform in einem Folgeprozess wie z.B. Sägen entfernt.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### Zeichnung

Nachstehend ist ein Ausführungsbeispiel der Erfindung in der Zeichnung dargestellt und in der nachfolgenden Beschreibung näher erläutert. In der Zeichnung zeigt
- Fig. 1: eine perspektivische Frontansicht einer bevorzugten Ausführungsform einer Reinigungsvorrichtung nach der Erfindung;
- Fig. 2: eine perspektivische Frontansicht der bevorzugten Ausführungsform der Reinigungsvorrichtung von Fig.1 mit geöffneten Dach- und Frontklappen;
- Fig. 3: eine perspektivische Schnittdarstellung durch die Reinigungsvorrichtung von Fig.1;
- Fig. 4: eine schematische Darstellung eines elektro-mechanischen Teils der Reinigungsvorrichtung von Fig. 1.

### Beschreibung des Ausführungsbeispiels

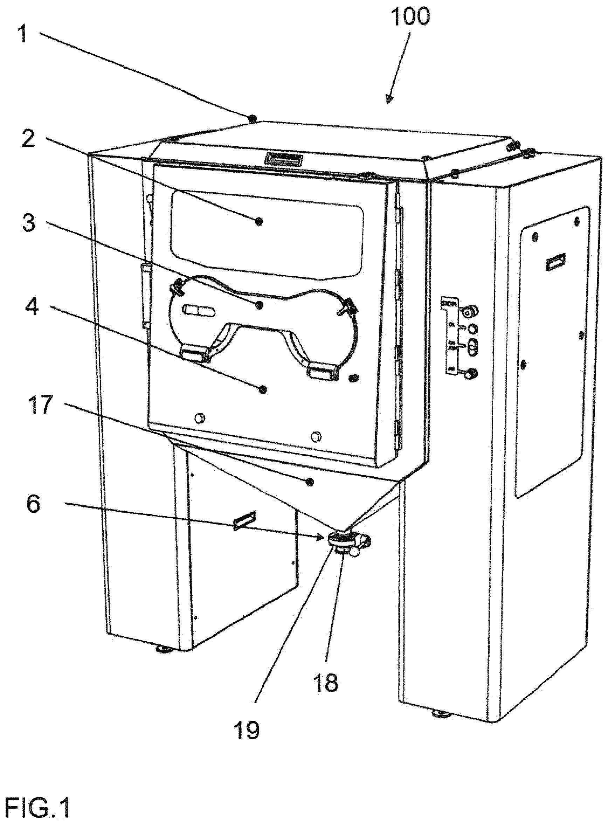

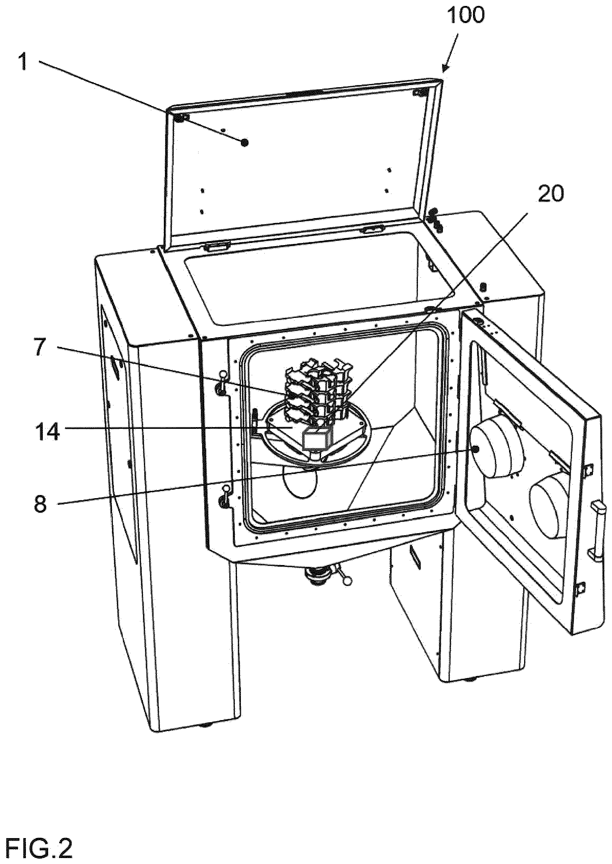

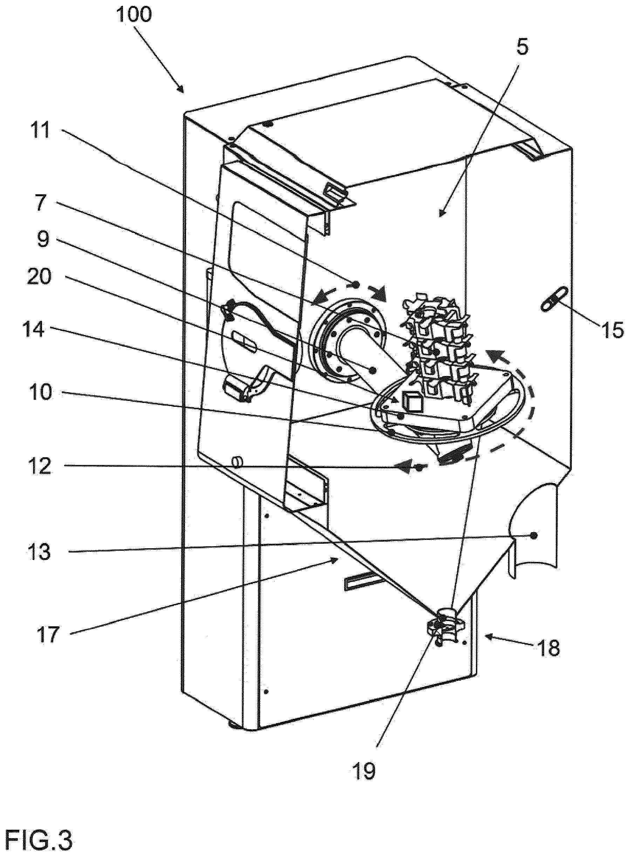

**Fig. 1** zeigt eine perspektivische Frontansicht einer bevorzugten Ausführungsform einer Reinigungsvorrichtung 100, durch welche unverfestigt gebliebenes pulverförmiges Aufbaumaterial von einem in **Fig. 2** und **Fig. 3** gezeigten dreidimensionalen Objekt 7 samt Bauplattform 14 gereinigt wird. Das Objekt 7, beispielsweise ein Bauteil oder ein Modell ist auf der Bauplattform 14 durch schichtweises Aufbringen und selektives Verfestigen des pulverförmigen Aufbaumaterials als Einheit hergestellt worden. Im hier vorliegenden Fall wurde das selektive Verfestigen des pulverförmigen Aufbaumaterials mittels energiereicher Strahlung, hier insbesondere mittels einer Lasersinterung (Laserstrahlung) vorgenommen.

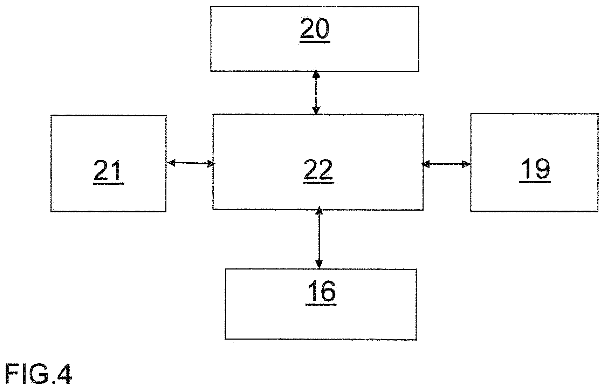

Die Reinigung soll hier lediglich das Entfernen von Restpulver betreffen, welches nach dem Auspacken des Objekts 7 und der Bauplattform 14 aus dem Pulverkuchen noch anhaftet. Die Reinigungsvorrichtung 100 wird beispielsweise durch eine in **Fig. 4** gezeigte elektronische Steuereinrichtung 22 in koordinierter Weise gesteuert, welche eine CPU beinhaltet, deren Betrieb durch ein Computerprogramm gesteuert wird.

Der Bauprozess und der Reinigungsprozess werden hier beispielsweise an voneinander getrennten Orten und in voneinander getrennten Vorrichtungen, der Bauprozess nämlich in einer hier nicht gezeigten Schichtbauvorrichtung und der Reinigungsprozess in der hier gezeigten Reinigungsvorrichtung 100 vollzogen.

Das Objekt 7 ist hier beispielsweise über die Bauplattform 14 während des Reinigungsprozesses in der Reinigungsvorrichtung 100 in eine hier nicht gezeigte Spanneinrichtung auf einem Drehteller 10 der Reinigungsvorrichtung 100 lösbar eingespannt. Die Reinigungsvorrichtung 100 umfasst eine in **Fig. 3** aufgeschnitten dargestellte staubdichte Reinigungskammer 5, in welcher der Reinigungsprozess des Objekts 7 samt Bauplattform 14 stattfindet und weiche eine durch eine Fronttüre 4 verschließbare Frontöffnung zum Be- und Entladen des Objekts 7 samt Bauplattform 14 aufweist. Die Fronttüre 4 ist mit einer Handschuhklappe 3 mit Handschuheingriffen 8 (**Fig. 2**) versehen, damit eine Bedienperson von außerhalb in die Reinigungskammer 5 eingreifen kann, beispielsweise um am Objekt 7 zu hantieren, ohne dass sie mit dem Pulver in Kontakt kommt. Mittels einer in der Fronttüre 4 ausgeführten Sichtscheibe 2 kann eine Bedienperson außerdem den Reinigungsprozess beobachten. Weiterhin weist die Reinigungskammer 5 eine Dachklappe 1 auf.

Die Reinigungskammer 5 weist beispielsweise einen sich nach unten trichterförmig verengenden Boden 17 auf, an dessen trichterförmiger Mündung eine Auslassöffnung 18 für von dem Objekt 7 und der Bauplattform 14 abgereinigtem Pulver ausgebildet ist. An die Auslassöffnung 18 kann beispielsweise ein Sammelbehälter für das Pulver staubdicht angeschlossen werden. Die Auslassöffnung 18 ist hier beispielsweise durch ein Ventil 6, insbesondere ein Scheibenventil staubdicht verschließbar, welches eine Öffnungs- und Schließposition aufweist. Im Bereich des trichterförmigen Bodens 17 ist auch beispielsweise eine Gehäuseentlüftung 13 ausgebildet (**Fig. 3**).

Wie insbesondere **Fig. 3** zeigt, ist der Drehteller 10 hier beispielsweise um eine erste Drehachse 12 mittels eines ersten Motors drehend antreibbar, insbesondere in einem Winkel von 0 bis 360 Grad, wie der erste teilkreisförmige Pfeil 12 symbolisiert. Weiterhin ist der Drehteller 10 an einem Dreharm 9 gelagert, der seinerseits um eine zweite Drehachse 11 mittels eines zweiten Motors drehbar angetrieben ist, wie der zweite teilkreisförmige Pfeil 11 symbolisiert, wobei die zweite Drehachse 11 hier beispielsweise senkrecht zur ersten Drehachse 12 ist. Die zweite Drehachse 11 ist hier beispielsweise in einer horizontalen Ebene angeordnet. Der Dreharm ist hier beispielsweise mit seinem ersten Ende in einem in einer beispielsweise vertikalen Wandung der Reinigungskammer 5 angeordneten ersten Drehlager drehbar gelagert, wobei das zweite Ende des Dreharms 9 beispielsweise frei auskragt. Alternativ könnte auch das zweite Ende des Dreharms 9 in einem zweiten Drehlager drehbar sein, welches in einer Wandung der Reinigungskammer angeordnet ist.

Der Drehteller 10 wird durch den ersten Motor um die erste Drehachse 12 beispielsweise in einem Winkelbereich von 0 Grad bis 360 Grad und der Dreharm 9 durch den zweiten Motor in einem zweiten Winkelbereich von beispielsweise 0 Grad bis 360 Grad drehbar angetrieben. Möglich sind jeweils auch Drehbewegungen von mehr als 360 Grad, beispielsweise um jeweils mehrere Umdrehungen auszuführen.

Der erste Motor und der zweite Motor sind bevorzugt Servomotoren, welche von einer elektronischen Steuerung 22 gesteuert oder geregelt werden, um stufenlos beliebige Schwenkstellungen des Dreharms 9 und des Drehtellers 10 und damit des Objekts 7 samt Bauplattform 14 einzustellen oder einzuregeln. Dadurch kann das auf dem Drehteller 10 gespannte Objekt 7 zusammen mit der Bauplattform 14 in eine Vielzahl von Schwenkstellungen gedreht werden, was ein Lösen von losem, nicht verfestigtem pulverförmigen Aufbaumaterial durch die Reinigungsvorrichtung 100 fördert. Die beiden Motoren, der Drehteller 9 und der Dreharm 9 sowie hier nicht gezeigte Drehlagerungen samt Gehäuse bilden zusammen eine Schwenkeinrichtung 16 der Reinigungsvorrichtung 100 aus, welche von der elektronischen Steuereinrichtung 16 gesteuert oder geregelt wird, wie aus Fig. 4 hervorgeht.

An dem Drehteller 10 ist außerdem ein von der elektronischen Steuereinrichtung 22 gesteuerter Rüttler 20 angeordnet, durch welchen das auf dem Drehteller 10 gespannte Objekt 7 samt Bauplattform 14 in Schwingungen versetzbar ist. Wenigstens die Schwingungsfrequenz und die Schwingungsamplitude dieser Schwingungen können mittels der elektronischen Steuereinrichtung 22 variiert werden, indem diese mit entsprechenden Signalen den Rüttler 20 steuert, wie aus Fig. 4 hervorgeht.

Weiterhin kann die Reinigungsvorrichtung 100 auch eine hier nicht im Ganzen gezeigte Strahleinrichtung aufweisen, durch welche ein Reinigungsstrahl eines Reinigungsmediums, beispielsweise ein Luftstrahl auf das Objekt 7 und die Bauplattform 14 gerichtet ist. Hier ist beispielsweise die Mündung einer Luftstrahldüse 15 der Strahleinrichtung innerhalb der Reinigungskammer 5 angeordnet und auf das Objekt 7 und die Bauplattform 14 gerichtet, wie in Fig. 3 angedeutet ist.

Daneben umfasst die Reinigungsvorrichtung 100 beispielsweise eine hier nicht gezeigte Absaugvorrichtung zum Absaugen von gelöstem Pulvermaterial aus der Reinigungskammer 5, hier beispielsweise über die Auslassöffnung 18. Hierzu sind an der Auslassöffnung 18 beispielsweise ein Rohr oder ein Schlauch angeschlossen, in welchem dann durch die Absaugvorrichtung ein Saugdruck in dem Rohr oder Schlauch erzeugt wird, welcher einen Saugeffekt auf in der Reinigungskammer 5 vorhandenes, loses Pulver ausübt.

Beispielsweise in der Auslassöffnung 18 ist ein Sensor 19 angeordnet, welcher eine Menge, eine Masse, einen Massenstrom, ein Volumen und/oder einen Volumenstrom des die Auslassöffnung 18 passierenden Pulvers erfassen kann. Anstatt in der Auslassöffnung 18 könnte der Sensor 19 auch im Mündungsbereich des trichterförmigen Bodens 17 der Reinigungskammer 5 oder auch außerhalb der Reinigungskammer 5, beispielsweise in dem Rohr oder Schlauch der Absaugvorrichtung angeordnet sein. Entscheidend ist lediglich, dass der Sensor 19 die Pulvermenge, das Pulvervolumen, den Pulvervolumenstrom, die Pulvermasse und/oder den Pulvermassenstrom des aus der Auslassöffnung 18 austretenden Pulvers messen kann, welches dann ausschließlich von dem Objekt 7 und von der Bauplattform 14 abgereinigtes Pulver darstellt, weil dafür Sorge getragen wird, dass in der Reinigungskammer 5 vor dem Beginn des Reinigungsprozesses außer an dem Objekt 7 und an der Bauplattform kein weiteres Pulver vorhanden ist. Der Sensor 19 kann beispielsweise ein kapazitiver, ein nach dem Ultraschallprinzip arbeitender Sensor oder auch ein optischer Sensor sein.

Für die folgenden Ausführungen wird eine "Reinigungsgröße" definiert, welche ein Maß für die durch die Auslassöffnung 18 im Rahmen des Reinigungsprozesses des Objekts 7 und der Bauplattform 14 hindurchtretende Menge (gleichbedeutend mit Masse, Massenstrom, Volumen und/oder Volumenstrom) an von dem Objekt 7 und von der Bauplattform 14 abgereinigtem Pulver darstellen soll. Der Sensor 19 sendet dann über eine elektrische Signalleitung oder auch drahtlos ein Meßsignal an die elektronische Steuereinrichtung 22, welches diese Reinigungsgröße repräsentiert.

In der elektronischen Steuereinrichtung 22 sind dann Softwareroutinen implementiert, durch welche die Schwenkeinrichtung 16 derart gesteuert oder geregelt wird, dass Schwenkstellungen des Objekts 7 und der Bauplattform 14 abhängig von der durch den Sensor 19 erfassten Reinigungsgröße gesteuert oder geregelt werden.

Das Objekt 7 weist hier beispielsweise Innenstrukturen wie Kanäle auf, welche hier beispielsweise unterschiedliche Ausrichtungen aufweisen. Die Wirkung der auf das am Objekt 7 und an der Bauplattform 14 anhaftende Pulver wirkenden Schwerkraft und des auf das Objekt 7 und die Bauplattform 14 aufgebrachten Reinigungsstrahls der Luftstrahldüse 15 und der mit Hilfe des Rüttlers 20 auf das Objekt 7 und die Bauplattform 14 aufgebrachten Schwingungen ist daher stark von der gerade eingenommenen Schwenkstellung des Objekts 7 und der Bauplattform 14 abhängig und bringen daher schwenkstellungsabhängig unterschiedliche Reinigungsergebnisse in Form der Reinigungsgröße mit sich, weil dann die inneren Kanäle oder auch die Außenflächen des Objekts 7 und der Bauplattform 14 in Bezug zur Richtung der Schwerkraft und damit in Bezug zur unteren Auslassöffnung 18 jeweils unterschiedliche Ausrichtungen aufweisen.

Beispielsweise ist ein hoher Abfluß von Pulver aus einem inneren Kanal des Objekts 7 zu erwarten, wenn das Objekt 7 in eine "günstige" Schwenkstellung gebracht wird, in welcher dieser Kanal parallel zur Richtung der Schwerkraft steht, damit nicht verfestigtes Pulver an den Innenwänden des inneren Kanals dann infolge der Schwerkraft und hier beispielsweise durch Schwingungsanregung mittels des Rüttlers 20 unterstützt aus dem Kanal herausfließen kann.

Vorzugsweise wird dann eine solche "günstige" Schwenkstellung des Objekts 7 und der Bauplattform 14 von der elektronischen Steuereinrichtung 22 durch die Rückkopplung der über den Sensor 19 gemessenen Reinigungsgröße dadurch ermittelt, dass die Reinigungsgröße dann einen vorgegebenen Mindestwert für die Reinigungsgröße erreicht oder überschritten hat. Dieser Mindestwert für die Reinigungsgröße kann abhängig vom jeweiligen Objekt 7 vorgegeben sein. Das Erreichen oder Überschreiten des Mindestwerts für die Reinigungsgröße durch die Reinigungsgröße deutet dann darauf hin, dass vom Objekt 7 und von der Bauplattform 14 abgereinigtes Pulver in erheblichem oder nennenswertem Umfang die Auslassöffnung 18 der Reinigungskammer 5 passiert hat.

Dann wird das Objekt 7 durch Ansteuerung der Schwenkeinrichtung 16 mittels der Steuereinrichtung 22 vorzugsweise solange in der zuletzt eingenommenen "günstigen" Schwenkstellung gehalten und dabei weiterhin die Reinigungsgröße durch den Sensor 19 erfasst, bis die Reinigungsgröße an der Auslassöffnung 18 den vorgegebenen Mindestwert oder einen anderen vorgegebenen Mindestwert unterschritten hat. Dies deutet dann daraufhin, dass in der zuletzt eingenommenen "günstigen" Schwenkstellung keine nennenswerte Menge an Pulver mehr von oder aus dem Objekt 7 und der Bauplattform 14 abfließen kann, sei es aufgrund des Einflusses der Schwerkraft, der Wirkung des Reinigungsstrahls der Luftstrahldüse 15 und/oder aufgrund der Wirkung der durch den Rüttler 20 auf das Objekt 7 und die Bauplattform 14 aufgebrachten Schwingungen.

Folglich wird dann mittels Steuerung der Schwenkeinrichtung 16 (erster Motor, zweiter Motor) durch die elektronische Steuereinrichtung 22 das Objekt 7 zusammen mit der Bauplattform 14 in weitere, von der vormals "günstigen" Schwenkstellung abweichende Schwenkstellungen geschwenkt, damit der oben beschriebene und von der Steuereinrichtung 22 gesteuerte Reinigungsprozess von Neuem beginnen kann.

Das Schwenken des Objekts 7 in weitere Schwenkstellungen und der Reinigungsprozess werden dann vorzugsweise beendet, wenn die erfasste Reinigungsgröße in keiner der eingenommenen Schwenkstellungen mehr den vorgegebenen Mindestwert für die Reinigungsgröße erreicht oder überschreitet. Dies stellt dann ein Indiz dafür dar, dass von oder aus dem Objekt 7 und der Bauplattform 14 keine nennenswerte Menge an nicht verfestigtem Aufbaumaterial mehr abgereinigt werden kann und das Objekt 7 und die Bauplattform 14 daher "sauber" sind.

Mit anderen Worten steuert die elektronische Steuereinrichtung 22 die Schwenkeinrichtung 16 in dem Reinigungsprozess derart, dass das Objekt 7 und die Bauplattform 14 in Bezug auf die Schwenkachsen 11, 12 in verschiedene Schwenkstellungen geschwenkt und dabei jeweils die Reinigungsgröße erfasst wird, wobei das Schwenken des Objekts 7 und der Bauplattform 14 in jeder Schwenkstellung der verschiedenen Schwenkstellungen gestoppt wird, in welcher die Reinigungsgröße einen vorgegebenen Mindestwert für die Reinigungsgröße erreicht oder überschritten hat. Dann werden das Objekt 7 und die Bauplattform 14 solange in der betreffenden Schwenkstellung gehalten und dabei weiterhin die Reinigungsgröße erfasst, bis die Reinigungsgröße den vorgegebenen Mindestwert oder einen anderen vorgegebenen Mindestwert unterschritten hat. Dann werden das Objekt 7 und die Bauplattform 14 in weitere Schwenkstellungen geschwenkt, wobei das Schwenken des Objekts 7 und der Bauplattform 14 in weitere Schwenkstellungen und der Reinigungsprozess beendet werden, wenn die erfasste Reinigungsgröße in keiner der eingenommenen Schwenkstellungen mehr den vorgegebenen Mindestwert für die Reinigungsgröße erreicht oder überschreitet.

Besonders bevorzugt ist die elektronische Steuereinrichtung 22 derart ausgebildet, dass sie wenigstens eine Schwenkstellung des Objekts 7 und der Bauplattform 14, in welcher die Reinigungsgröße den vorgegebenen Mindestwert erreicht oder überschritten hat, in einem Arbeitsspeicher als eine bevorzugte Schwenkstellung abspeichert. Der Arbeitsspeicher 21 ist dann mit der elektronischen Steuereinrichtung 22 wirkverbunden.

Dann kann die elektronische Steuereinrichtung 22 ausgebildet sein, dass sie über Schwenkeinrichtung 16 das Objekt 7 und die Bauplattform 14 in wenigstens eine in einem Arbeitsspeicher 21 gespeicherte bevorzugte Schwenkstellung steuert, wenn sie wenigstens ein Signal erhalten hat, welches signalisiert oder repräsentiert, dass ein Objekt 7 samt Bauplattform 14, welches bereits von nicht verfestigtem Pulver gereinigt worden ist, aus der Reinigungskammer 5 entfernt und durch eine in Bezug auf das entfernte Objekt 7 samt Bauplattform 14 eine im Wesentlichen identische Geometrie aufweisende und noch nicht von nicht verfestigtem Pulver gereinigte Einheit von Objekt 7 und Bauplattform 14 ersetzt worden ist.

In vorteilhafter Weise können dadurch Schwenkstellungen, welche sich im Laufe eines bereits abgeschlossenen Reinigungsprozesses eines Objekts 7 samt Bauplattform 14 als "bevorzugt" oder "günstig" herausgestellt haben, dann als "bevorzugte" oder "günstige" Schwenkstellungen in wenigstens einem anschließenden Reinigungsprozess für weitere Objekte 7 samt Bauplattformen 14 mit identischer Geometrie verwendet werden. Denn bei den weiteren Objekten samt Bauplattform ist dann davon auszugehen, dass die "günstigen" oder "bevorzugten" Schwenkstellungen des zuvor gereinigten Objekts ebenso "günstige" oder "bevorzugte" Schwenkstellungen darstellen, in welchen die Reinigungsgröße besonders hoch ist.

Bevorzugt sind Steuer- oder Regelroutinen der elektronischen Steuereinrichtung 22 auch ausgebildet, dass sie die Schwingungsfrequenz und/oder die Schwingungsamplitude der durch den Rüttler 20 erzeugten und über den Drehteller 10 auf das Objekt 7 und die Bauplattform 14 übertragenen Schwingungen abhängig von der durch den Sensor 19 erfassten Reinigungsgröße steuern oder regeln. Beispielsweise sind die Steuer- oder Regelroutinen der elektronischen Steuereinrichtung 22 ausgebildet, dass sie in einer eingenommenen Schwenkstellung die Schwingungsfrequenz und/oder die Schwingungsamplitude der durch den Rüttler 20 erzeugten Schwingungen solange variieren, bis die erfasste Reinigungsgröße einen relativen Maximalwert unter verschiedenen Werten von erfassten Reinigungsgrößen einnimmt, die mit unterschiedlichen Schwingungsfrequenzen und/oder mit unterschiedlichen Schwingungsamplituden erzielt worden sind, und dass dann die dem Maximalwert entsprechende Schwingungsfrequenz und/oder Schwingungsamplitude zumindest in der eingenommenen Schwenkstellung beibehalten wird.

Mit anderen Worten versucht die elektronische Steuereinrichtung 22 durch Variation von Schwingungsfrequenz und/oder der Schwingungsamplitude der über den Rüttler 20 auf das Objekt 7 und die Bauplattform 14 aufgebrachten Schwingungen diejenige Schwingungsfrequenz und/oder diejenige Schwingungsamplitude herauszufinden, welche sich über die Rückkopplung der Reinigungsgröße durch den Sensor 19 als günstig oder optimal herausgestellt hat (haben) und dann einen relativen Maximalwert der Reinigungsgröße hervorrufen.

Auch ist hier die elektronische Steuereinrichtung 19 beispielsweise ausgebildet, dass sie die Schwingungsfrequenz und/oder die Schwingungsamplitude, in welcher die Reinigungsgröße den relativen Maximalwert eingenommen hat, in dem Arbeitsspeicher 21 als eine bevorzugte Schwingungsfrequenz und/oder als bevorzugte Schwingungsamplitude speichert.

Auch ist hier die elektronische Steuereinrichtung 22 beispielsweise weiterhin ausgebildet, dass sie den Rüttler 20 steuert, damit dieser Schwingungen mit der in dem Arbeitsspeicher 21 gespeicherten bevorzugten Schwingungsfrequenz und/oder mit der bevorzugten Schwingungsamplitude erzeugt, wenn sie ein Signal erhalten hat, welches signalisiert oder repräsentiert, dass die Einheit aus Objekt 7 und Bauplattform 14, welche bereits von nicht verfestigtem Pulver gereinigt worden ist, aus der Reinigungskammer 5 entfernt und durch ein in Bezug auf die entfernte Einheit eine im Wesentlichen identische Geometrie aufweisende, noch nicht von nicht verfestigtem Pulver gereinigte Einheit aus Objekt und Bauplattform ersetzt und ein weiterer Reinigungsprozeß zur Reinigung der weiteren Einheit gestartet worden ist. Dieses Signal kann entweder automatisch oder auch händisch von einer Bedienperson der Reinigungsvorrichtung 100 erzeugt werden.

Auch hier wird dann die Historie wenigstens eines Reinigungsprozesses eines Objekts 7 samt Bauplattform 14 genutzt, um in der Vergangenheit sich als "bevorzugt" oder "günstig" herausgestellte Schwingungsfrequenzen und/oder Schwingungsamplituden auch bei durch den Rüttler 20 erzeugten Schwingungen hervorzurufen, mit welchen wenigstens ein weitere Einheit aus Objekt und Bauplattform angeregt wird, welche eine im Wesentlichen identische Geometrie aufweist und die im Anschluss einem Reinigungsprozess unterworfen wird.

Da jede Einheit 7 aus Objekt und Bauplattform 14 geometrie- und materialabhängig unterschiedliche Eigenfrequenzen aufweist, wird die Frequenz der durch den Rüttler 20 erzeugten Schwingungen bevorzugt variiert. Wenn dabei die Frequenz der durch den Rüttler 20 erzeugten Schwingungen der Eigenfrequenz der Einheit aus Objekt 7 und Bauplattform 14 oder Vielfachen davon entspricht, so schwingt die Einheit 7, 14 verstärkt in ihrer Eigenfrequenz, was das Ablösen oder Abfließen von Pulver begünstigt. Die Eigenfrequenz der Einheit 7, 14 oder von Vielfachen der Eigenfrequenz kann daher wiederum durch den Wert oder die Höhe der Reinigungsgröße detektiert werden, welche durch den Sensor 19 erfasst wird. Stellt sich nämlich bei der Variation der Schwingungsfrequenz der durch den Rüttler 20 aufgebrachten Schwingungen heraus, dass bei einer der eingestellten Schwingungsfrequenzen die Reinigungsgröße maximal ist, so deutet dies daraufhin, dass die es sich bei der eingestellten Schwingungsfrequenz um die Eigenfrequenz der Einheit 7, 20 oder einer Vielfachen hiervon handelt. Die so detektierte Eigenfrequenz wird dann als "bevorzugte" oder "günstige" Schwingungsfrequenz in dem Arbeitsspeicher 21 gespeichert und dann in einem weiteren nachfolgenden Reinigungsprozess einer geometrisch identischen Einheit aus Objekt 7 und Bauplattform 14 als "bevorzugte" oder "günstige" Schwingungsfrequenz zur Schwingungsanregung dieser geometrisch identischen Einheit 7, 14 verwendet.

Bei dem hier beschriebenen bevorzugten Ausführungsbeispiel einer Reinigungsvorrichtung 100 wird der Reinigungsprozess an einer durch Schichtbau erzeugten, aus einem Pulverkuchen bereits ausgepackten Einheit aus Objekt 7 (Bauteil oder Werkstück) und Bauplattform 14 beschrieben. Es ist jedoch auch möglich, lediglich das Objekt 7 in dem Reinigungsprozess zu reinigen, wenn beispielsweise zuvor die Bauplattform 14 abgetrennt wurde. Auch ist grundsätzlich möglich, mit der Reinigungsvorrichtung 100 ein noch nicht aus dem Pulverkuchen befreites Objekt 7 samt Bauplattform 14 von dem Pulverkuchen zu befreien.

### Bezugszahlenliste

- 100: Reinigungsvorrichtung
- 1: Dachklappe
- 2: Sichtscheibe
- 3: Handschuhklappe
- 4: Fronttüre
- 5: Reinigungskammer
- 6: Ventil
- 7: Objekt
- 8: Handschuheingriffe
- 9: Dreharm
- 10: Drehteller
- 11: zweite Drehachse
- 12: erste Drehachse
- 13: Gehäuseentlüftung
- 14: Bauplattform
- 15: Luftstrahldüse
- 16: Schwenkeinrichtung
- 17: Boden
- 18: Auslassöffnung
- 19: Sensor
- 20: Rüttler
- 21: Arbeitsspeicher
- 22: elektronische Steuereinrichtung

## Patentansprüche

1. Reinigungsvorrichtung (100), welche dreidimensionale Objekte (7, 14), die durch schichtweises Aufbringen und selektives Verfestigen eines pulverförmigen Aufbaumaterials hergestellt worden sind, von die Objekte (7, 14) umgebendem und/oder in Öffnungen oder Kanälen der Objekte (7, 14) verbliebenem, nicht verfestigtem pulverförmigem Aufbaumaterial reinigt, umfassend
a) eine Reinigungskammer (5), in welcher die Reinigung eines Objekts (7, 14) stattfindet und welche wenigstens eine Auslassöffnung (18) zum Auslass des von dem Objekt (7, 14) abgereinigten Pulvers aus der Reinigungskammer (5) aufweist, wobei das abgereinigte Pulver die Auslassöffnung (18) passiert,
b) eine Schwenkeinrichtung (16), an welcher das Objekt (7, 14) spannbar und durch welche das Objekt (7, 14) in Bezug auf wenigstens eine Schwenkachse (11, 12) in verschiedene Schwenkstellungen schwenkbar ist,
c) eine elektronische Steuereinrichtung (22), welche die Schwenkvorrichtung steuert oder regelt, um die Schwenkstellungen des Objekts (7, 14) zu steuern oder zu regeln, **dadurch gekennzeichnet, dass**
d) sie weiterhin eine Sensoreinrichtung (19) umfasst, welche eine Reinigungsgröße erfasst, die eine Menge, eine Masse, einen Massenstrom, ein Volumen und/oder einen Volumenstrom des die wenigstens eine Auslassöffnung passierenden, vom oder aus dem Objekt (7, 14) abgereinigten pulverförmigen Aufbaumaterials repräsentiert, wobei
e) die elektronische Steuereinrichtung (22) die Schwenkeinrichtung (16) derart steuert oder regelt, dass die Schwenkstellungen des Objekts (7, 14) abhängig von der Reinigungsgröße gesteuert oder geregelt werden, wobei
f) die elektronische Steuereinrichtung (22) die Schwenkeinrichtung (16) in dem folgendem Reinigungsprozess derart steuert oder regelt, dass
- das Objekt (7, 14) in Bezug auf die wenigstens eine Schwenkachse (11, 12) in verschiedene Schwenkstellungen geschwenkt und dabei die Reinigungsgröße durch die Sensoreinrichtung (19) erfasst wird, wobei das Schwenken des Objekts (7, 14) in jeder Schwenkstellung der verschiedenen Schwenkstellungen gestoppt wird, in welcher die Reinigungsgröße einen vorgegebenen Mindestwert für die Reinigungsgröße erreicht oder überschritten hat, und dann
- das Objekt (7, 14) solange in der betreffenden Schwenkstellung gehalten und dabei die Reinigungsgröße erfasst wird, bis die Reinigungsgröße den vorgegebenen Mindestwert unterschritten hat, und dann
- das Objekt (7, 14) in weitere Schwenkstellungen geschwenkt wird, wobei
- das Schwenken des Objekts (7, 14) in weitere Schwenkstellungen und der Reinigungsprozess beendet werden, wenn die erfasste Reinigungsgröße in keiner der eingenommenen Schwenkstellungen mehr den vorgegebenen Mindestwert für die Reinigungsgröße erreicht oder überschreitet.

2. Reinigungsvorrichtung nach Anspruch 1, **dadurch gekennzeichnet, dass** die elektronische Steuereinrichtung (22) ausgebildet ist, dass sie wenigstens eine Schwenkstellung des Objekts (7, 14), in welcher die Reinigungsgröße den Mindestwert erreicht oder überschritten hat, in einem Arbeitsspeicher (21) als eine bevorzugte Schwenkstellung speichert.

3. Reinigungsvorrichtung nach einem der vorhergehenden Ansprüche, **dadurch gekennzeichnet, dass** die elektronische Steuereinrichtung (22) ausgebildet ist, dass sie die Schwenkeinrichtung (16) in die wenigstens eine in dem Arbeitsspeicher (21) gespeicherte bevorzugte Schwenkstellung steuert oder regelt, wenn sie ein Signal erhalten hat, welches signalisiert oder repräsentiert, dass ein Objekt (7, 14), welches bereits von nicht verfestigtem pulverförmigem Aufbaumaterial gereinigt worden ist, aus der Reinigungskammer (5) entfernt und durch ein in Bezug auf das entfernte Objekt (7, 14) eine im Wesentlichen identische Geometrie aufweisendes und noch nicht von nicht verfestigtem pulverförmigem Aufbaumaterial gereinigtes weiteres Objekt ersetzt und ein weiterer Reinigungsprozess zur Reinigung des weiteren Objekts gestartet worden ist.

4. Reinigungsvorrichtung nach einem der vorhergehenden Ansprüche, **dadurch gekennzeichnet, dass** ein durch die elektronische Steuereinrichtung (22) steuer- oder regelbarer Rüttler (20) vorgesehen ist, durch welche das an oder in der Schwenkeinrichtung (16) gespannte Objekt (7, 14) in Schwingungen versetzbar ist.

5. Reinigungsvorrichtung nach Anspruch 4, **dadurch gekennzeichnet, dass** die elektronische Steuereinrichtung (22) ausgebildet ist, dass sie die Schwingungsfrequenz und/oder die Schwingungsamplitude der durch den Rüttler (20) erzeugten Schwingungen abhängig von der erfassten Reinigungsgröße steuert oder regelt.

6. Reinigungsvorrichtung nach Anspruch 5, **dadurch gekennzeichnet, dass** die elektronische Steuereinrichtung (22) ausgebildet ist, dass sie in einer eingenommenen Schwenkstellung die Schwingungsfrequenz und/oder die Schwingungsamplitude der durch den Rüttler (20) erzeugten Schwingungen solange variiert, bis die erfasste Reinigungsgröße einen relativen Maximalwert unter verschiedenen Werten von erfassten Reinigungsgrößen einnimmt, die mit unterschiedlichen Schwingungsfrequenzen und/oder die Schwingungsamplituden erzielt worden sind, und dass dann die dem Maximalwert entsprechende Schwingungsfrequenz und/oder Schwingungsamplitude zumindest in der eingenommenen Schwenkstellung beibehalten wird.

7. Reinigungsvorrichtung nach Anspruch 6, **dadurch gekennzeichnet, dass** die elektronische Steuereinrichtung (22) ausgebildet ist, dass sie die Schwingungsfrequenz und/oder die Schwingungsamplitude, in welcher die Reinigungsgröße den relativen Maximalwert eingenommen hat, in einem Arbeitsspeicher (21) als eine bevorzugte Schwingungsfrequenz und/oder als eine bevorzugte Schwingungsamplitude speichert.

8. Reinigungsvorrichtung nach Anspruch 7, **dadurch gekennzeichnet, dass** die elektronische Steuereinrichtung (22) ausgebildet ist, dass sie den Rüttler (20) steuert oder regelt, damit dieser Schwingungen mit der in dem Arbeitsspeicher (21) gespeicherten bevorzugten Schwingungsfrequenz und/oder mit der bevorzugten Schwingungsamplitude erzeugt, wenn sie ein Signal erhalten hat, welches signalisiert oder darstellt, dass ein Objekt (7, 14), welches bereits von nicht verfestigtem pulverförmigem Aufbaumaterial gereinigt worden ist, aus der Reinigungskammer (5) entfernt und durch ein in Bezug auf das entfernte Objekt (7, 14) eine im Wesentlichen identische Geometrie aufweisendes, noch nicht von nicht verfestigtem pulverförmigem Aufbaumaterial gereinigtes weiteres Objekt ersetzt und ein weiterer Reinigungsprozess zur Reinigung des weiteren Objekts gestartet worden ist.

9. Reinigungsvorrichtung nach einem der vorhergehenden Ansprüche, **dadurch gekennzeichnet, dass** die Sensoreinrichtung (19) wenigstens einen kapazitiven und/oder nach dem Ultraschallprinzip arbeitenden Sensor und/oder wenigstens einen optischen Sensor umfasst.

10. Reinigungsvorrichtung nach einem der vorhergehenden Ansprüche, **dadurch gekennzeichnet, dass** die Auslassöffnung (18) in einem in Gebrauchslage der Reinigungsvorrichtung (100) unteren Bereich der Reinigungskammer (5) angeordnet ist.

11. Reinigungsvorrichtung nach einem der vorhergehenden Ansprüche, **dadurch gekennzeichnet, dass** die Sensoreinrichtung (19) im Bereich der Auslassöffnung (18) angeordnet ist.

12. Reinigungsvorrichtung nach einem der vorhergehenden Ansprüche, **dadurch gekennzeichnet, dass** ein Strömungsquerschnitt der wenigstens einen Auslassöffnung (18) mittels einer Ventileinrichtung (6) zwischen einer Öffnungsstellung, in welcher der Strömungsquerschnitt maximal ist, und einer Schließstellung, in welcher der Strömungsquerschnitt gleich Null ist, steuerbar ist.

13. Reinigungsvorrichtung nach einem der vorhergehenden Ansprüche, **dadurch gekennzeichnet, dass** die Schwenkeinrichtung (16) einen Drehteller (10) umfasst, auf welchem das Objekt (7, 14) lösbar spannbar ist, wobei der Drehteller (10) um eine erste Drehachse (12) drehbar angetrieben ist.

14. Reinigungsvorrichtung nach einem der vorhergehenden Ansprüche, **dadurch gekennzeichnet, dass** die Schwenkeinrichtung (16) einen um eine zweite, gegenüber der ersten Drehachse (12) verschiedenen Drehachse (11) drehbar angetriebenen Dreharm (9) umfasst, auf welcher der Drehteller (10) um die erste Drehachse (12) drehbar angetrieben gelagert ist.

15. Reinigungsvorrichtung nach einem der vorhergehenden Ansprüche, **dadurch gekennzeichnet, dass** die wenigstens eine Auslassöffnung (18) derart mit einer Absaugeinrichtung in Strömungsverbindung steht, dass in der wenigstens einen Auslassöffnung (18) eine Saugströmung in Bezug auf das nicht verfestigte pulverförmige Aufbaumaterial in der Reinigungskammer (5) erzeugt wird, und dass die Sensoreinrichtung (19) derart in oder an der Auslassöffnung (18) angeordnet ist, dass sie die Reinigungsgröße erfasst.

## Claims

1. A cleaning device (100) configured to clean three dimensional objects (7, 14) produced by layered application and selective solidification of a powdery building material wherein the three dimensional objects (7, 14) are cleared from a non-solidified powdery building material that envelops the objects (7, 14) and/or that remains in openings or channels of the objects (7, 14), the cleaning device comprising:
a) a cleaning chamber (5) in which an object (7, 14) is cleaned and that includes at least one outlet opening (18) configured to release powder that has been cleaned from the object (7, 14) from the cleaning chamber (5) wherein the cleaned off powder passes through the outlet opening (18),
b) a pivot device (16) on which the object (7, 14) is fixable and on which the object (7, 14) is pivotable relative to at least one pivot axis (11, 12) into various pivot positions,
c) an electronic control device (22) that controls or regulates the pivot device to control or regulate the pivot positions of the object (7, 14),
**characterized in that**
d) the cleaning device (100) further comprises a sensor device (19) which captures a cleaning variable that represents an amount, a mass, a mass flow, a volume and/or a volume flow of the powdery building material that is cleaned from the object (7, 14) and that passes the at least one outlet opening,
e) wherein the electronic control device (22) controls or regulates the pivot device (16) so that pivot positions of the object (7, 14) are controlled or regulated as a function of the cleaning variable, wherein
f) the electronic control device (22) controls or regulates the pivot device (16) during a subsequent cleaning process so that
- the object (7, 14) is pivoted with respect to the at least one pivot axis (11, 12) into various pivot positions and so that the cleaning variable is captured by the sensor device (19), wherein a pivoting of the object (7, 14) is stopped in each pivot position of the different pivot positions in which the cleaning variable reaches or exceeds a predetermined minimum value for the cleaning variable, subsequently
- wherein the object (7, 14) is stopped in a respective pivot position and the cleaning variable is captured until the cleaning variable has dropped below the predetermined minimum value, subsequently
- wherein the object (7, 14) is pivoted into additional pivot positions,
- wherein the pivoting of the object (7, 14) into the additional pivot positions and the cleaning process are terminated when the captured cleaning variable does not reach or exceed the predetermined minimum value for the cleaning variable in any of the pivot positions.

2. The cleaning device (100) according to claim 1, **characterized in that** the electronic control device (22) is configured to store at least one pivot position of the object (7, 14) in which the cleaning variable has reached or exceeded the minimum value in a random access memory (21) as a preferred pivot position.

3. The cleaning device (100) according to one of the preceding claims, **characterized in that** the electronic control device (22) is configured to control the pivot device (16) into the at least one advantageous pivot position that is stored in the random access memory (21) when the control device receives a signal which signals or represents that an object (7, 14) which has already been cleaned from the non-solidified powdery building material has been removed from the cleaning chamber (5) and has been replaced by another object that essentially has an identical geometry as the removed object (7, 14) and that has not been cleaned yet from the non-solidified powdery building material and another cleaning process to clean the other object has been started.

4. The cleaning device (100) according to one of the preceding claims, **characterized in that** a shaker (20) is provided that is controllable or regulatable by the electronic control device (22) wherein the shaker (20) is configured to cause the object (7, 14) that is fixed in the pivot device (16) to oscillate.

5. The cleaning device (100) according to claim 4, **characterized in that** the electronic control device (22) is configured to control or regulate an oscillation frequency and/or an oscillation amplitude of oscillations caused by the shaker (20) as a function of the captured cleaning variable.

6. The cleaning device (100) according to claim 5, **characterized in that** the electronic control device (22) is configured to vary the oscillation frequency and/or oscillation amplitude of the oscillations generated by the shaker (20) in a pivot position until the detected cleaning variable assumes a relative maximum value among various values of detected cleaning variables achieved at different oscillation frequencies and/or oscillation amplitudes and wherein the oscillation frequency corresponding to the maximum value and/or oscillation amplitudes is maintained in the assumed pivot position.

7. The cleaning device (100) according to claim 6, **characterized in that** the electronic control device (22) is configured to store an oscillation frequency and/or an oscillation amplitude in which the cleaning device has assumed a maximum value in an operating memory as a preferred oscillation frequency and/or as a preferred oscillation amplitude.

8. The cleaning device (100) according to claim 7, **characterized in that** the electronic control device (22) is configured to control or regulate the shaker so that the shaker generates oscillations with the preferred oscillation frequency stored in the operating memory (21) and/or with the preferred oscillation amplitude when the control device has received a signal which signals or represents that an object (7, 14) that has already been cleaned from non-solidified powdery building material has been removed from the cleaning chamber (5) and replaced with another object that has an essentially identical geometry as the removed object (7, 14) and that is not yet cleaned from the not yet solidified powdery building material and another cleaning process has been started to clean the other object.

9. The cleaning device (100) according to one of the preceding claims, **characterized in that** the sensor device (19) includes at least one capacitive sensor and/or ultra sound sensor and/or at least one optical sensor.

10. The cleaning device (100) according to one of the preceding claims, **characterized in that** the outlet opening (18) is arranged in a portion of the cleaning chamber (5) that is below in an operating position of the cleaning device (100).

11. The cleaning device (100) according to one of the preceding claims, **characterized in that** the sensor device (19) is arranged in a portion of the outlet opening (18).

12. The cleaning device (100) according one of the preceding claims, **characterized in that** a flow cross section of the at least one outlet opening (19) is controllable between an opening position where the flow cross section is at a maximum and a closed position where the flow cross section is zero.

13. The cleaning device (100) according to one of the preceding claims, **characterized in that** the pivot device (16) includes a turntable (10) where the object (7, 14) is fixable in a disengageable manner wherein the turn table (10) is drivable to rotate about a first rotation axis (12).

14. The cleaning device (100) according to one of the preceding claims, **characterized in that** the pivot device (16) includes a rotating arm (9) that is drivable to rotate about a second rotation axis (11) that differs from the first rotation axis (12) wherein the turn table (10) is driveable to rotate about the first rotation axis (12).

15. The cleaning device (100) according to one of the preceding claims, **characterized in that** the at least one outlet opening (18) is flow connected with a suction device so that the at least one outlet opening (18) generates a suction flow of the non-solidified powdery building material in the cleaning chamber (5) and that the sensor device (19) is arranged in or at the outlet opening (18) so that the sensor device detects the cleaning variable.

## Revendications

1. Dispositif de nettoyage (100) qui nettoie des objets tridimensionnels (7, 14), qui ont été fabriqués par l'application en couche et la solidification sélective d'un matériau constituant sous forme de poudre, de matériau constitutif sous forme de poudre non solidifié qui entoure les objets (7, 14) et/ou qui est resté dans des orifices ou des conduits des objets (7, 14) comprenant :
a) une chambre de nettoyage (5) dans laquelle a lieu le nettoyage d'un objet (7, 14) et qui présente au moins un orifice de sortie (18) pour l'évacuation de la poudre ôtée par nettoyage de l'objet (7, 14) hors de la chambre de nettoyage (5), la poudre ôtée par nettoyage passant par l'orifice de sortie (18),
b) un dispositif de pivotement (16) sur lequel l'objet (7, 14) peut être serré et par lequel l'objet (7, 14) peut être pivoté dans différentes positions de pivotement par rapport à au moins un axe de pivotement (11, 12),
c) un dispositif de commande électronique (22) qui commande ou régule le dispositif de pivotement pour commander ou réguler les positions de pivotement de l'objet (7, 14), **caractérisé en ce**
d) **qu'**il comprend de plus un dispositif de capteur (19) qui détecte une grandeur de nettoyage qui représente une quantité, une masse, un flux massique, un volume et/ou un débit volumique du matériau constitutif sous forme de poudre ôté par nettoyage de l'objet ou de l'intérieur de l'objet (7, 14) qui passe par le au moins un orifice de sortie, cependant que
e) le dispositif de commande électronique (22) commande ou régule le dispositif de pivotement (16) de telle manière que les positions de pivotement de l'objet (7, 14) sont commandées ou régulées en fonction de la grandeur de nettoyage, cependant que
f) le dispositif de commande électronique (22) commande ou régule le dispositif de pivotement (16) dans le processus de nettoyage suivant de telle manière que
- l'objet (7, 14) est pivoté dans différentes positions de pivotement par rapport audit au moins un axe de pivotement (11, 12) et que la grandeur de nettoyage est alors détectée par le dispositif de capteur (19), le pivotement de l'objet (7, 14) étant stoppé dans chaque position de pivotement des différentes positions de pivotement dans laquelle la grandeur de nettoyage atteint ou a dépassé une valeur minimale prédéfinie pour la grandeur de nettoyage et
- **que** l'objet (7, 14) est maintenu dans la position de pivotement concernée et que la grandeur de nettoyage est alors détectée jusqu'à ce que la grandeur de nettoyage se situe en dessous de la valeur minimale prédéfinie et
- **que** l'objet (7, 14) est ensuite pivoté dans d'autres positions de pivotement, cependant que
- le pivotement de l'objet (7, 14) dans d'autres positions de pivotement et le processus de nettoyage sont arrêtés lorsque la grandeur de nettoyage détectée n'atteint ou ne dépasse plus la valeur minimale prédéfinie dans aucune des positions de pivotement occupées.

2. Dispositif de nettoyage selon la revendication 1, **caractérisé en ce que** le dispositif de commande électronique (22) est configuré tel qu'il mémorise au moins une position de pivotement de l'objet (7, 14), dans laquelle la grandeur de nettoyage atteint ou a dépassé la valeur minimale, en tant qu'une position de pivotement préférée dans une mémoire de travail (21).

3. Dispositif de nettoyage selon l'une des revendications précédentes, **caractérisé en ce que** le dispositif de commande électronique (22) est configuré tel qu'il commande ou régule le dispositif de pivotement (16) dans la au moins une position de pivotement préférée mémorisée dans la mémoire de travail (21) lorsqu'il a reçu un signal qui signalise ou représente qu'un objet (7, 14,) qui a déjà été nettoyé du matériau constitutif sous forme de poudre non solidifié, a été enlevé de la chambre de nettoyage (5) et remplacé par un autre objet qui présente une géométrie sensiblement identique par rapport à l'objet enlevé (7, 14) et qui n'a pas encore été nettoyé du matériau constitutif sous forme de poudre non solidifié et qu'un autre processus de nettoyage a été lancé pour le nettoyage de l'autre objet.

4. Dispositif de nettoyage selon l'une des revendications précédentes, **caractérisé en ce qu'**il est prévu un vibrateur (20) qui peut être commandé ou régulé par le dispositif de commande électronique (22) grâce auquel des vibrations peuvent être inculquées à l'objet (7, 14) serré sur ou dans le dispositif de pivotement (16).

5. Dispositif de nettoyage selon la revendication 4, **caractérisé en ce que** le dispositif de commande électronique (22) est configuré tel qu'il commande ou régule la fréquence de vibration et/ou l'amplitude de vibration des vibrations produites par le vibrateur (20) en fonction de la grandeur de nettoyage détectée.

6. Dispositif de nettoyage selon la revendication 5, **caractérisé en ce que** le dispositif de commande électronique (22) est configuré tel qu'il varie, dans une position de pivotement occupée, la fréquence de vibration et/ou l'amplitude de vibration des vibrations produites par le vibrateur (20) jusqu'à ce que la grandeur de nettoyage détectée prenne une valeur maximale relative parmi différentes valeurs de grandeurs de nettoyage détectées qui ont été obtenues avec différentes fréquences de vibration et/ou amplitudes de vibration et que la fréquence de vibration et/ou l'amplitude de vibration correspondant à la valeur maximale soit ensuite conservée au moins dans la position de pivotement occupée.

7. Dispositif de nettoyage selon la revendication 6, **caractérisé en ce que** le dispositif de commande électronique (22) est configuré tel qu'il mémorise la fréquence de vibration et/ou l'amplitude de vibration, dans laquelle la grandeur de nettoyage a pris la valeur maximale relative, dans une mémoire de travail (21) comme une fréquence de vibration préférée et/ou comme une amplitude de vibration préférée.

8. Dispositif de nettoyage selon la revendication 7, **caractérisé en ce que** le dispositif de commande électronique (22) est configuré tel qu'il commande ou régule le vibrateur (20) pour que celui-ci produise des vibrations avec la fréquence de vibration préférée et/ou avec l'amplitude de vibration préférée mémorisée dans la mémoire de travail (21) lorsqu'il a reçu un signal qui signalise ou représente qu'un objet (7, 14,) qui a déjà été nettoyé du matériau constitutif sous forme de poudre non solidifié, a été enlevé de la chambre de nettoyage (5) et remplacé par un autre objet qui présente une géométrie sensiblement identique par rapport à l'objet enlevé (7, 14) et qui n'a pas encore été nettoyé du matériau constitutif sous forme de poudre non solidifié et qu'un autre processus de nettoyage a été lancé pour le nettoyage de l'autre objet.

9. Dispositif de nettoyage selon l'une des revendications précédentes, **caractérisé en ce que** le dispositif de capteur (19) comprend au moins un capteur capacitif et/ou un capteur qui fonctionne selon le principe des ultrasons et/ou au moins un capteur optique.

10. Dispositif de nettoyage selon l'une des revendications précédentes, **caractérisé en ce que** l'orifice de sortie (18) est placé dans une zone de la chambre de nettoyage (5), zone qui est inférieure en position d'utilisation du dispositif de nettoyage (100).

11. Dispositif de nettoyage selon l'une des revendications précédentes, **caractérisé en ce que** le dispositif de capteur (19) est placé dans la zone de l'orifice de sortie (18).

12. Dispositif de nettoyage selon l'une des revendications précédentes, **caractérisé en ce qu'**une section transversale d'écoulement du au moins un orifice de sortie (18) peut être commandée avec un dispositif de vanne (6) entre une position d'ouverture dans laquelle la section transversale d'écoulement est maximale et une position de fermeture dans laquelle la section d'écoulement est égale à zéro.

13. Dispositif de nettoyage selon l'une des revendications précédentes, **caractérisé en ce que** le dispositif de pivotement (16) comprend un plateau rotatif (10) sur lequel l'objet (7, 14) peut être serré de manière amovible, le plateau rotatif (10) étant entraîné en rotation autour d'un premier axe de rotation (12).

14. Dispositif de nettoyage selon l'une des revendications précédentes, **caractérisé en ce que** le dispositif de pivotement (16) comprend un bras rotatif (9) entraîné en rotation autour d'un second axe de rotation (11) différent du premier axe de rotation (12), bras rotatif sur lequel le plateau rotatif (10) est positionné en étant entraîné en rotation autour du premier axe de rotation (12).

15. Dispositif de nettoyage selon l'une des revendications précédentes, **caractérisé en ce que** le au moins un orifice de sortie (18) est en liaison d'écoulement avec un dispositif d'aspiration de telle manière qu'un écoulement d'aspiration par rapport au matériau constitutif sous forme de poudre non solidifié dans la chambre de nettoyage est produit dans le au moins un orifice de sortie (18) et que le dispositif de capteur (19) est placé dans ou sur l'orifice de sortie (18) de manière à détecter la grandeur de nettoyage.
